# FASCICULE DE BREVET EUROPEEN

(11) **EP 0 354 126 B1**
(45) Date de publication et mention de la délivrance du brevet: **27.10.1993**
(21) Numéro de dépôt: 89402206.0
(22) Date de dépôt: 03.08.1989
(51) Int. Cl.: G21F 7/06, B25J 5/04

(54) **Système stabilisateur pour télémanipulateur**
Stabilisierungssystem für einen Fernmanipulator
Stabilisation system for a remote manipulator

(30) Priorité: 05.08.1988 FR 8810628
(43) Date de publication de la demande: 07.02.1990
(73) Titulaire: COMMISSARIAT A L'ENERGIE ATOMIQUE, 75015 Paris Cédex 15 (FR)
(72) Inventeur: Streiff, Gérard, F-30650 Rochefort du Gard (FR)
(74) Mandataire: Mongrédien, André

(56) Documents cités:
- FR-A- 2 513 799
- GB-A- 1 031 022
- GB-A- 2 106 854

## Description

La présente invention se rapporte à un système stabilisateur pour télémanipulateur.

La position des bras des télémanipulateurs doit être stabilisée par des systèmes appropriés, faute de quoi les efforts exercés sur l'outil et transmis le long du bras ou exercés par l'outil et transmis à travers le bras aboutiraient à des déplacements de l'appareil porteur et à des déréglages incessants. Jusqu'à présent, on disposait les bras de télémanipulation sur des appareils porteurs de rigidité suffisante pour les maintenir en place. On peut reprocher à ces appareils d'être coûteux, encombrants, souvent conçus pour une installation spécifique et donc de ne pas pouvoir toujours être déplaçables partout.

L'invention vise à écarter ces inconvénients à l'aide d'un système stabilisateur beaucoup plus maniable et pratique.

Ce système s'applique plus précisément à un télémanipulateur porté par un appareil de déplacement circulant dans une zone de travail et muni d'un bras mobile terminé par un outil de préhension. Il se caractérise par le fait que l'ensemble télémanipulateur est suspendu à l'appareil de déplacement et est muni de plusieurs bobines de câbles terminés par des éléments de fixation que l'outil de préhension peut saisir et placer sur des appuis de préhension fixes situés dans la zone de travail.

Les bobines comprennent avantageusement un enroulement automatique et un moyen de blocage des câbles une fois déroulés.

On va maintenant décrire l'invention plus en détail à l'aide des figures suivantes annexées à titre illustratif et nullement limitatif :
- la figure 1 est une vue partielle de dessus du système stabilisateur selon l'invention et de la zone de travail dans laquelle il circule,
- la figure 2 est une vue de coté détaillée du système stabilisateur, et
- les figures 3 et 4 représentent deux détails de l'invention.

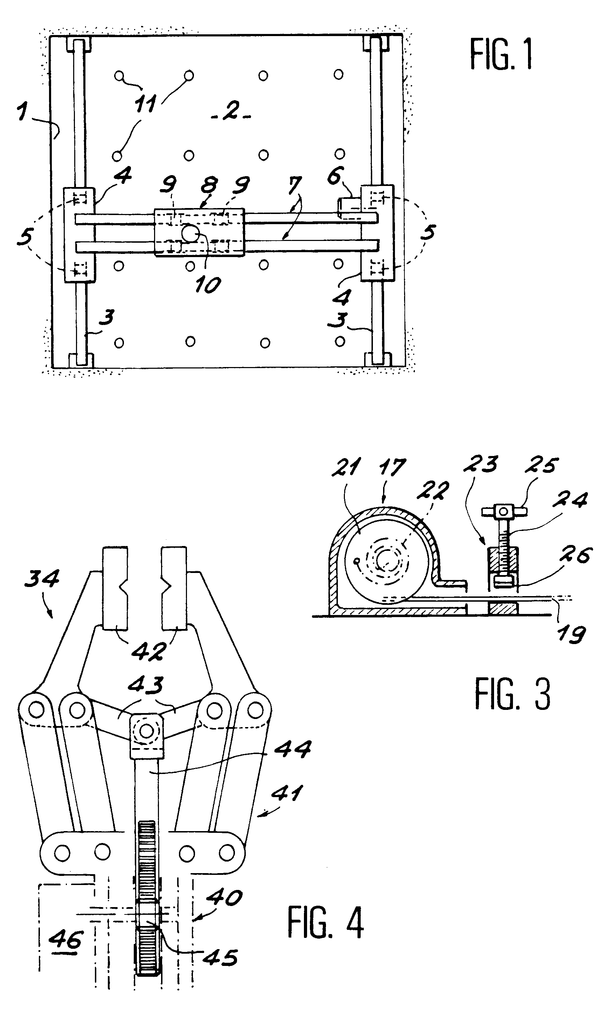

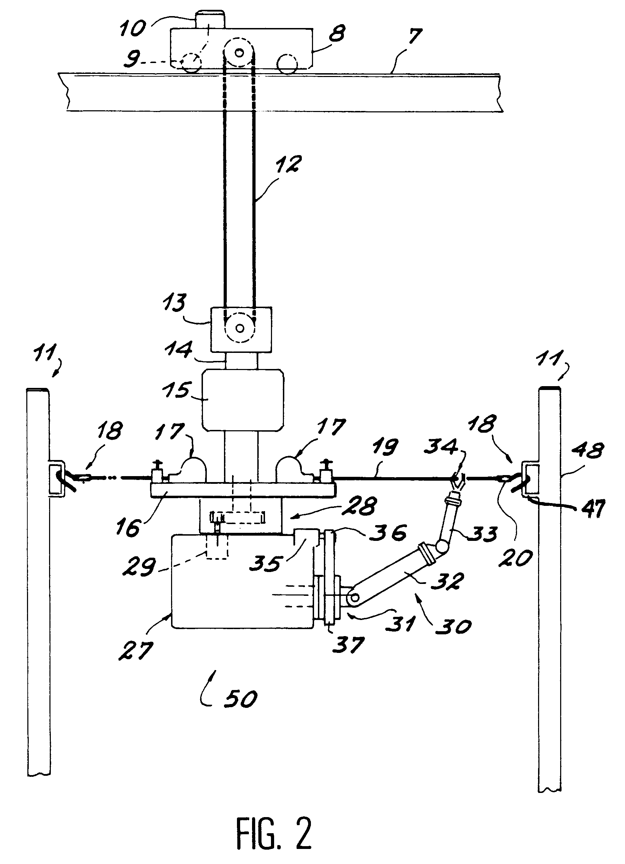

La figure 1 montre une paroi étanche 1 qui délimite une zone de travail 2. La zone de travail 2 contient deux rails parallèles 3, surélevés au-dessus du sol, sur chacun desquels circule un châssis 4 muni de roues ou de galets 5. Un des galets 5 est entraîné par un moteur télécommandé 6. Les châssis 4 sont réunis par deux rails transversaux 7. La mise en marche du moteur télécommandé 6 déplace donc les deux châssis 4 le long des rails surélevés 3.

Un chariot 8 circule le long des rails transversaux 7 à l'aide de galets 9 dont l'un est actionné par un moteur télécommandé 10 qui déplace donc le chariot 8 le long des rails transversaux 7.

Le chariot 8 ainsi que l'ensemble télémanipulateur accroché au chariot, peut donc venir au-dessus de n'importe quel endroit de la zone de travail 2, qui est par ailleurs munie d'appuis de réception 11, qui vont être décrits à l'aide des autres figures.

Le chariot 8 comprend un appendice descendant 12 terminé par un moufle 13 auquel est accrochée, avec possibilité de pivotement, une tige 14 munie d'un lest 15 et terminée par un plateau inférieur 16 sur lequel des bobines 17 d'élingues 18 sont fixées. Les élingues 18 se composent d'un câble 19 terminé par un crochet 20 ; la partie des câbles 19 opposée au crochet 20 est enroulée sur la bobine 17 et plus précisément autour d'un treuil 21 tournant dans la bobine 17 et relié à celle-ci par des ressorts en spirale 22. Les câbles 19 passent par un petit portique 23 établi devant chaque bobine 17, sur le plateau inférieur 16, et dont le sommet comprend un taraudage dans lequel est logée une tige filetée 24, terminée à son extrémité supérieure par une poignée 25 et à son extrémité inférieure par un disque moleté 26.

Quand le crochet 20 est libre, le câble 19 est réenroulé automatiquement sur la bobine 17 ; en actionnant la poignée 25, il est par contre possible de presser le disque moleté 26 sur le câble 19 pour le bloquer.

La tige 14 est prolongée au-dessous du plateau inférieur 16 par un télémanipulateur 50 auquel il est relié par un bloc de commande 28 muni d'un motoréducteur 29 permettant de faire tourner le télémanipulateur 50 par rapport à la tige 14 autour d'un axe vertical. Le télémanipulateur 50 est constitué d'un caisson arrière 27 prolongé par un bras 30 esclave comprenant successivement une épaule 31, un bras arrière 32, un bras avant 33 et une pince 34. Ces pièces sont articulées de façon à pouvoir se déformer les unes par rapport aux autres dans un plan ; l'épaule 31 est reliée au caisson arrière 27 du télémanipulateur 50 par une liaison qui lui permet de pivoter autour d'un axe passant par ce plan. La position de chacun des degrés de liberté est réglée à l'aide d'un motoréducteur 35 qui entraîne une poulie 36 faisant tourner la pièce voisine à l'aide d'une courroie 37. Un tel ensemble n'a été représenté que pour le degré de liberté entre le caisson arrière 27 et l'épaule 31, mais des systèmes semblables se retrouvent pour les autres degrés de liberté.

La pince 34 comprend un poignet 40 déplaçable en rotation sur le bras avant 33. La pince 34 est munie de deux paires de bielles 41, chaque paire de bielles 41 s'achevant par une mâchoire 42. Les paires de bielles 41 sont articulées par une extrémité au poignet 40 et vers leur milieu à une extrémité de biellettes 43 articulées elles-mêmes à leur autre extrémité à une bielle de commande 44 unique. La bielle de commande 44 s'étend dans le poignet 40 et comprend par exemple une partie en crémaillère 45 sur laquelle agit un motoréducteur 46. Le mouvement de coulisse de la bielle de commande 44 qui en résulte déplace les biellettes 43 et fait finalement pivoter les paires de bielles 41 en sens opposés pour écarter ou rapprocher les mâchoires 42.

Les appuis de réception 11 consistent ici en des anneaux 47, établis sur des poteaux 48 ou sur la paroi 1, et auxquels on peut accrocher les crochets 20.

Quand on veut entreprendre un travail à l'aide du bras 30, on rapproche, à l'aide du pont roulant, celui-ci de l'endroit où l'on veut fixer un crochet 20 sur un anneau 47 et on agit sur le bras 30 pour lui faire saisir le câble 19 près du crochet 20, pour approcher ce dernier de l'anneau 47 et pour l'accrocher. Quand l'opération a été répétée pour un nombre suffisant d'élingues 18, on peut approcher, à l'aide du pont roulant, le bras 30 de l'endroit où on veut travailler, les bobines 17 d'élingues 18 enroulant ou déroulant les câbles 19 grâce aux ressorts en spirale 22. On oriente, si nécessaire, le bras 30 à l'aide du bloc de commande 28. On peut estimer que le système télémanipulateur 50 est maintenu suffisamment en place grâce à la force des ressorts 22. Ce maintien est encore plus efficace si l'on dispose d'un système de blocage des câbles 19 tel que constitué par exemple par les portiques 23.

On peut alors utiliser le bras 30 pour accomplir le travail pour lequel il a été prévu. Quand ce travail est terminé, le bras 30 relève éventuellement les disques moletés 26 et par déplacement du pont retire les crochets 20 des anneaux 47 pour permettre aux câbles 19 de se réenrouler. Le système est alors prêt pour une autre utilisation.

Le système est particulièrement simple et pratique ; il ne nécessite qu'un nombre suffisant de bobines 17 pour s'opposer aux déplacements du télémanipulateur 50 dans toutes les directions. Au moins trois bobines 17 sont nécessaires en pratique, avec des orientations angulaires de préférence uniformes.

Il faut noter que ce système est parfaitement viable pour l'usage avec des bras étanches travaillant dans un liquide (dans une piscine par exemple) où les crochets 20 pourraient avantageusement être remplacés par des ventouses que le bras 30 plaquerait sur les parois de ladite piscine.

L'invention peut être mise en oeuvre de nombreuses manières. Le pont roulant représenté peut être ainsi remplacé par un simple palan évoluant sur un rail ; le moufle 13 par un simple crochet ; les crochets 20 et les anneaux 47 par n'importe quel système de fixation et d'emboîtement approprié ; les bobines 17 peuvent être construites de nombreuses manières ; les ressorts 22 peuvent être remplacés par des systèmes motorisés appropriés, et les moyens de blocage 23, 26 par un freinage ou par l'irréversibilité des systèmes motorisés. Le télémanipulateur 50 décrit succinctement est plus précisément fabriqué par la Société La Calhène et porte la référence MA 23M, mais bien d'autres conviennent évidemment. Sous tous ces aspects, on est essentiellement limité en fonction de ce qui est disponible dans le commerce.

## Revendications

1. Système stabilisateur d'un télémanipulateur (50) porté par un appareil de déplacement (8) circulant dans une zone de travail (2) et muni d'un bras mobile (30) terminé par un outil de préhension (34), caractérisé en ce que l'ensemble télémanipulateur est suspendu à l'appareil de déplacement et est muni de plusieurs bobines (17) de câbles (19) terminés par des éléments de fixation (20) que l'outil de préhension peut saisir et placer sur des appuis de préhension fixes (47) situés dans la zone de travail.

2. Système stabilisateur suivant la revendication 1, caractérisé en ce que les bobines (17) comprennent un ressort (22) d'enroulement des câbles (19).

3. Système stabilisateur suivant l'une quelconque des revendications 1 ou 2, caractérisé en ce qu'il comprend un moyen de blocage approprié (23, 26) des câbles (19).

4. Système stabilisateur suivant l'une quelconque des revendications 1 à 3, caractérisé en ce que les éléments de fixation sont des crochets (20) et les appuis de préhension fixes des anneaux (47).

## Claims

1. Stabilizer system for a telemanipulator (50) carried by a displacement apparatus (8) travelling in a working zone (2) and provided with a mobile arm (30) terminated by a gripping tool (34), characterized in that the telemanipulator system is suspended on the displacement apparatus and provided with several reels (17) of cables (19) terminated by fixing elements (20), which the gripping tool can seize and place on fixed gripping supports (47) located in the working area.

2. Stabilizer system according to claim 1, characterized in that the reels (17) incorporate a spring (22) for winding up cables (19).

3. Stabilizer system according to either of the claims 1 or 2, characterized in that it comprises at least one appropriate locking means (23, 26) for cables (19).

4. Stabilizer system according to any one of the claims 1 to 3, characterized in that the fixing elements are hooks (20) and the fixed gripping supports are rings (47).

## Patentansprüche

1. Stabilisierungssystem für einen Fernmanipulator (50), getragen von einem Verschiebungsapparat (8), verfahrbar in einer Arbeitszone (2) und mit einem beweglichen Arm (30) ausgestattet, der mit einem Greifwerkzeug (34) endet,
dadurch **gekennzeichnet,**
daß der Fernmanipulatoraufbau an dem Verschiebungsapparat hängt und mit mehrerer Spulen (17) für Kabel (19) ausgestattet ist, die mit Befestigungselementen (20) enden, welche das Greifwerkzeug ergreifen und in feststehenden Befestigungshaltern (47) anbringen kann, die sich in der Arbeitszone befinden.

2. Stabilisierungssystem nach Anspruch 1, dadurch gekennzeichnet, daß die Spulen (17) eine Aufwickelfeder (22) für die Kabel (19) enthalten.

3. Stabilisierungssystem nach einem der Ansprüche 1 oder 2, dadurch gekennzeichnet, daß es eine geeignete Blockierungseinrichtung (23, 26) für die Kabel (19) enthält.

4. Stabilisierungssystem nach einem der Ansprüche 1 bis 3, dadurch gekennzeichnet, daß die Befestigungselemente Haken (20) sind, und die feststehenden Befestigungshalter Ringe (47) sind.
